# EUROPEAN PATENT SPECIFICATION

(11) **EP 1 179 045 B1**
(45) Date of publication and mention of the grant of the patent: **01.12.2004**
(21) Application number: 00913195.4
(22) Date of filing: 22.03.2000
(51) Int. Cl.: C12G 3/00, C12G 3/06

(54) **INGREDIENTS COMPOSITION OF A STRONG ALCOHOLIC BEVERAGE, NAMED "TAFFIA"**
ZUSAMMENSETZUNG DER INHALTSSTOFFE EINES STARKEN ALKOHOLISCHEN GETRÄNKES, WELCHES SICH "TAFFIA" NENNT
COMPOSITION D'INGREDIENTS POUR BOISSON FORTEMENT ALCOOLISEE NOMMEE TAFFIA

(30) Priority: 24.03.1999 RU 99105359
(43) Date of publication of application: 13.02.2002
(73) Proprietor: Manchenko, Sergei Valerievich, Kaliningradskaya obl. 236029 (RU)
(72) Inventor: Manchenko, Sergei Valerievich, Kaliningradskaya obl. 236029 (RU)
(74) Representative: Staudt, Hans-Peter, Dipl.-Ing.
(86) International application number: PCT/RU2000/000091
(87) International publication number: WO 2000/056855

(56) References cited:
- RU-A1- 95 109 513
- RU-C1- 2 035 504
- RU-C1- 2 145 344
- SU-A1- 1 824 436

## Description

### Technical Field

The present invention is related to the alcoholic beverage industry, namely the to strong alcoholic beverages made by mixing, with the aromatic and gustatory ingredients.

### Background Art

1. Copyright certificate USSR N 1824436, 1993.
2. Shitov A.M. "Preparation of curative alcoholic beverages ", M.: AOZT Inpro-res, 1996, p 113 (prototype).

There is an ingredients composition of a strong alcoholic beverage containing the mixing of several alcohols made of different kinds of grape raw material, and water (1.).

The disadvantages of this beverage composition are the complexity and large duration of the manufacturing method.

There is also the ingredients composition of a strong alcoholic beverage containing two kinds of alcohol, where one of them is the rum alcohol, and the softened water (2.).

The disadvantages of this beverage composition are the complexity of the manufacturing method with colour and ethers usage, where the sharply specific organoleptic properties constricts the beverage consumers circle.

### Disclosure of Invention

The aim of the invention is diversification of high-performance strong alcoholic beverages with the smoothed weak scent and the rum taste with the simplification of the manufacturing method and the expansion of a beverage consumers circle simultaneously.

The solution to the object underlying the invention is given in claim 1.

The technical result of the invention, is the creation of the original strong alcoholic beverage with the sweetish-rough scent which is not pronounced and resembles the Far East Schizandra leaves scent, and the gentle rum taste.

Besides, the composition may additionally contain the fructose syrup in 200 - 350 kg to 1000 dal quantity as well as the cola nut, pineapple, orange or vanilla flavour.

Thus, the ingredients composition of a strong alcoholic beverage named "TAFFIA" includes two kinds of alcohol, which are obtained by different manufacturing methods, where the raw material for one of them is sugar-beet, and for the other is sugar cane, i.e. two kinds of vegetative raw material, which are grow in different climatic conditions.

The ingredients composition of a strong alcoholic beverage named "TAFFIA" is produced in waterproof tanks by a thorough mixing of the above indicated alcohols in a stipulated ratio to achieve a homogeneous condition.

The obtained alcohol mixing have to be supplied by the softened water to get a required beverage strength, and, if necessary, a syrup of fructose and - or a flavour and carefully mixed.

An allowable beverage strength variation is ± 0,2 %.

A beet sugar molasses alcohol must be exposed to the dirt purification before the usage for a strong alcoholic beverage, named "TAFFIA" preparation.

Softened water is produced by the known methods, for example, by clearing a drinking water with ion-exchange resins, Na - cation or lime-soda processing.

The final product filtration process must be realised through the filters not less than three times. It is similar to the filtration of special vodka.

### Modes for Carrying Out the Invention

In particular cases the ingredients composition of a strong alcoholic beverage, named "TAFFIA" may be following:

| Example 1. | |
|---|---|
| Beet sugar molasses alcohol in % to a volume ratio | - 65 |
| Cane sugar rum alcohol in % to a volume ratio | - 35 |
| Fructose syrup in kg on 1000 l | - 25 |
| Softened water for the 35 % beverage strength | - the rest |

| Example 2. | |
|---|---|
| Beet sugar molasses alcohol in % to a volume ratio | - 50 |
| Cane sugar molasses syrup alcohol in % to a volume ratio | - 50 |
| Fructose syrup in kg to 1000 l | - 30 |
| A pineapple flavour in kg to 1000 l | - 1 |
| Softened water for the 35 % beverage strength | - the rest |

In all the ingredients ratios inside the adjusted limits, a strong alcoholic beverage, named "TAFFIA" has following organoleptic parameters:
An appearance - transparent liquid without extraneous particles and inclusions,
Colour - colourless transparent,
Taste - rum, gentle,
Scent - not pronounced sweetish-rough scent, resembles the Far East
Schizandra leaves scent, in case of adding flavours ― aromatized.
The acidity of water in a beverage corresponds to the PH = 5 - 8,5.
The impurity concentration (by the analysis results) is:

| | |
|---|---|
| Aldehydes (mg in l) | - 20 |
| Fusel oils (mg in l) | - 4 - 35 |
| Ethers (mg in l) | - 4,5 - 15. |

Impurity concentration exact values depend of the composition version fulfilment, but they are inside the indicated limits.

The invention realisation variants are not limited by only the described here examples. It can have a lot of versions, which are not exceeding the limits of the underwritten claims.

Taking into account a range of possible versions of preparation, a strong alcoholic beverage, named "TAFFIA" may have a large group of commercial performances, marked in depend of realisation by different labels: extra, special, mild, aromatized, clean, luxury and so on. A range of production thereby extends and the tastes of a large circle of the potential buyers are taken into account.

A strong alcoholic beverage, named "TAFFIA" is bottled by 0,04 l up to 3,0 l bottles of a decolourised glass or plastic of the special form.
Standard temperature in fill completeness control is: 20 °C.
A fill completeness deviation can rise up to 6,5 %.

A strong alcoholic beverage, named "TAFFIA" bottles are capped by a standard propeller aluminium or plastic fuse, with or without a batcher.

The label would contain the original "TAFFIA" trademark.

### Industrial Applicability

Present invention is able to be realised by the general-purpose equipment for the alcoholic beverages production which is prevalent in a food industry.

## Claims

1. Alcoholic beverage containing the following ingredients:
two kinds of alcoholic ingredients, wherein one of said alcoholic ingredients is a rum alcohol, and
softened drinking water added to reach the required alcohol content,
**characterized in that**
the first kind of alcoholic ingredient of said two kinds of alcoholic ingredients is beet sugar molasses alcohol with an alcohol content not lower than 96 % vol. and
the second kind of alcoholic ingredient of said two kinds of alcoholic ingredients, which is the rum alcohol, is either cane sugar rum alcohol with an alcohol content not lower than 80 % vol. or cane sugar molasse syrup alcohol with an alcohol content not lower than 80 % vol.;
wherein said first kind of alcoholic ingredient constitutes between 50 and 70 % vol. of the total amount of alcoholic ingredients and said second kind of alcoholic ingredient constitutes between 30 and 50 % vol. of the total amount of alcoholic ingredients and
wherein said softened drinking water is added in an amount so that the total alcohol content of said beverage is between 27 and 50 % vol.

2. Alcoholic beverage as claimed in claim 1, **characterized in that** it additionally contains fructose syrup in a quantity of 200 -350 kg per 10 000 litres (1 000 dal).

3. Alcoholic beverage as claimed in claim 1 and 2, **characterized in that** it additionally contains cola nut, pineapple, orange or vanilla flavour.

## Patentansprüche

1. Alkoholisches Getränk mit den folgenden Bestandteilen:
zwei Arten alkoholischer Bestandteile, wobei einer der alkoholischen Bestandteile ein Rum-Alkohol ist, und
enthärtetes Trinkwasser, welches zum Erreichen des gewünschten Alkoholgehalts beigemischt wird,
**dadurch gekennzeichnet, dass**
die erste Art alkoholischen Bestandteils der beiden Arten alkoholischer Bestandteile Alkohol aus Rübenzuckermolasse mit einem Alkoholgehalt nicht geringer als 96 Vol.-% ist und
die zweite Art alkoholischen Bestandteils der beiden alkoholischen Bestandteile, welche der Rum-Alkohol ist, entweder Rohrzucker-Rum-Alkohol mit einem Alkoholgehalt nicht geringer als 80 Vol.-% oder Rohrzucker-Molassesirup-Alkohol mit einem Alkoholgehalt nicht geringer als 80 Vol.-% ist;
wobei die erste Art alkoholischen Bestandteils zwischen 50 und 70 Vol.-% der Gesamtmenge alkoholischer Bestandteile ausmacht und die zweite Art alkoholischen Bestandteils zwischen 30 und 50 Vol.-% der Gesamtmenge alkoholischer Bestandteile ausmacht und
wobei das enthärtete Trinkwasser in einer Menge beigemischt wird, so dass der Gesamtalkoholgehalt des Getränks zwischen 27 und 50 Vol.-% liegt.

2. Alkoholisches Getränk nach Anspruch 1, **dadurch gekennzeichnet, dass** es zusätzlich Fructose-Sirup in einer Menge von 200 - 350 kg pro 10.000 Liter (1.000 Dekaliter) enthält.

3. Alkoholisches Getränk nach Anspruch 1 und 2, **dadurch gekennzeichnet, dass** es zusätzlich Kolanuß-, Ananas-, Orangen- oder Vanille-Aroma enthält.

## Revendications

1. Boisson alcoolique avec les ingrédients suivants:
deux façons d'ingrédients alcooliques, en quoi un des ingrédients alcooliques est un alcool de rhum, et
l'eau potable adoucie, qui est ajoutée pour atteindre le taux d'alcool souhaité,
**caractérisé en ce que**
la première façon d'ingrédient alcoolique de lesdits deux façons d'ingrédients alcooliques est alcool de mélasse de sucre de betteraves avec une taux en alcool pas légèrement que 96 % de vol. et
la deuxième façon d'ingrédient alcoolique de lesdits deux façons d'ingrédients alcooliques, qui est l'alcool de rhum, est l'un ou l'autre alcool de rhum de sucre de canne avec une taux en alcool pas légèrement que 80 % de vol. ou alcool de sirop de molasse de sucre de canne avec une taux en alcool pas légèrement que 80% de vol.;
en quoi la première façon d'ingrédient alcoolique constitue entre 50 et 70 % de vol. du montant total d'ingrédients alcooliques et la deuxième façon d'ingrédient alcoolique constitue entre 30 et 50 % de vol. du montant total d'ingrédients alcooliques et
en quoi l'eau potable adoucie est ajoutée dans une quantité de sorte que le taux d'alcool total de la boisson se situe entre 27 et 50 % de vol..

2. Boisson alcoolique selon la revendication 1, **caractérisé en ce qu'**il contient en plus sirop de fructose dans une quantité de 200 - 350 kg par 10.000 litres (1.000 décalitres).

3. Boisson alcoolique selon la revendication 1 et 2, **caractérisé en ce qu'**elle contient en plus l'arôme de kola, d'ananas, d'orange ou de vanille.
